# EUROPEAN PATENT APPLICATION

(11) **EP 4 851 905 A1**
(43) Date of publication of application: **09.12.2026**
(21) Application number: 26183409.7
(22) Date of filing: 05.06.2026
(51) Int. Cl.: G06Q 30/018, H04L 9/00

(54) **METHOD FOR IDENTIFYING AN OWNER'S OBJECT**

(30) Priority: 06.06.2025 IT 202500013294
(71) Applicant: Tages Società Cooperativa, 56017 San Giuliano Terme (PI) (IT)
(72) Inventor: PETRI, Massimiliano, 56017 Pisa (IT); GUIDI, Barbara, 56020 Santa Maria a Monte (PI) (IT); MICHIENZI, Andrea, 50054 Fucecchio (FI) (IT)
(74) Representative: Santi, Filippo

(57) **Abstract**

The present invention relates to a method for recognising an object (10) belonging to an owner of said object (10). The method comprises providing (S01) a recognition application (1) and providing (S02) a server (2) configured to exchange data with said application (1) through a data network (9). The method also provides for creating (S10) a description (11) of the object (10). It provides for choosing (S20) at least one recognition detail (21a-c) of the object (10) and for detecting (S30) at least one representation (31a-c) of said detail. A data file (41) with information on the owner and the object is also created (S40). Subsequently, loading (S50) said representation (31a-c) and said data file (41) into the recognition application (1) is envisaged. The method comprises creating (S60) by means of the application (1) and the server (2) a unique document (61) that brings together the description (11), the representation (31a-c) and the data file (41). A certificate of ownership (12) of the object (10) is also created, in the form of a non-fungible token NFT, associated with said unique document (61). Lastly, the method concludes with the loading (S70) of the unique document (61) in electronic format into the storage memory (3) of the server (2).

## Description

The present invention relates to a method for recognising a lost object and/or theft of said object, so as to facilitate and hasten the return of the object into the possession of the owner.

There is a particular need to return into the possession of objects that have been lost due to distraction or stolen by third parties. This relates, above all, to commonly used objects, in particular small vehicles such as bicycles or motorised or non-motorised push scooters, but also to items of clothing, electric and electronic apparatuses, sports equipment such as skis, tennis rackets and so on.

In order to facilitate the attribution to the owner of a lost or stolen object, when it is found, punchings and/or the creation of a manufacturer's serial number as a chassis number are currently used.

The application of active or passive tags (RFID labels) is also known, but these expedients have the disadvantage of being easily detectable or removable through scratching or detachment.

Systems for the registration and digital transfer of ownership of assets are also known, which use distributed ledger technologies (blockchains) to guarantee the integrity of the data, as shown in document US 2021/201310 A1. However, these systems often have several technical limitations. In the first place, they are frequently based on monolithic and integrated architectures, in which the management of ownership and the descriptive data of the object are closely coupled inside a specific proprietary network. This closed architecture limits the flexibility and interoperability of the system, limiting it to a single technological implementation. In the second place, identification of the object in these systems is typically assigned to a single unique identifier or "fingerprint", such as a cryptographic hash or a pattern derived from a physical feature thereof. Although it is efficient for cryptographic verification, this approach is fragile for practical recognition in the case of loss or theft: if the identifier is damaged, removed or a feature thereof is altered, recognition of the object can become impossible. Lastly, these systems are primarily conceived for certifying or transferring ownership, rather than for facilitating the recognition or physical recovery of an object by third parties, such as law enforcement agencies, who need rapid access to a rich and easily interpretable set of descriptive and visual data.

There is therefore a need for a method that facilitates the attribution to the owner of an object that is lost or stolen, and subsequently found and handed in to an authority, that does not have the conventional limitations of punchings or affixing of active or passive tags, and that simultaneously overcomes the limits of flexibility, robustness and purposes of the known systems of digital certification of ownership.

An aim of the present invention is therefore to provide a method for tracking down the owner of an object that is found after being lost or stolen, which overcomes the limitations of the punchings or tags currently used for this purpose, and that simultaneously overcomes the technical limits of the existing digital certification systems.

A particular aim of the invention is to provide such a method that involves the use of elements of recognition of an object, chosen or created by the owner, that are not easily detectable by third parties.

Another aim of the invention is to provide such a method that also acts as a deterrent against the theft of objects of various type.

These and other aims are achieved by a method for recognising an object belonging to an owner of said object, as defined in the appended claim 1. Advantageous variants of the method are defined in the dependent claims.

According to an aspect of the invention, the method comprises the steps of:
- providing a recognition application configured to be run by a computing device, in particular chosen from among a smartphone, a tablet, a computer;
- providing a server provided with a storage memory, said server being configured to exchange data with the application through a data network;
- creating a description of the object;
- choosing at least one recognition detail of the object;
- detecting at least one representation of the at least one recognition detail;
- creating a data file with information on the owner and the object;
- loading the at least one representation and the data file into the recognition application;
- creating, by means of the recognition application, in combination with the server, a unique document in electronic format that brings together the description of the object, the representation of the recognition detail and the data file and a certificate of ownership of said object, in the form of a non-fungible token NFT, associated with said unique document;
- loading the unique document in electronic format into the storage memory of the server.

In this manner, an archive is formed of objects that are searchable through said keywords and the data of said owner, so that, in the case of loss or theft of said object, third parties who find said object or law enforcement agencies who receive said found object can:
- inform the owner that it has been found;
- be certain that the object actually belongs to the owner, by searching in said object for the presence of said at least one recognition detail.

As already said, it is possible to register in said archive or in several archives lost objects, for which the owner has reported the loss thereof to an authority, in which case the method is performed with the finding and the handing over to an office of such authority, such as a public lost property office. Registration in the archive is also possible for stolen items or ones that third parties have misappropriated, for which a report has also been filed, for example theft or loss by the owner, in which case the method is performed after the items have been found, typically during an investigation.

Advantageously, said certificate of ownership is associated with said unique document through a reference such as a Uniform Resource Locator URL, an identifier number or a hash.

In an advantageous embodiment variant, the method further comprises a step of integrating the unique document, said step of integrating comprising, in turn, the steps of:
- providing an integration document chosen from among:
   ∘ a report of loss or theft of said object;
   ∘ a certificate of transfer of said object to another owner;
   ∘ an altered representation of said object;
   ∘ further photographs of further recognition details;
   ∘ a combination of what is listed above.
- associating said integration document with said unique document, obtaining said integrated unique document, in particular, associated with said unique recognition code.

The possibility of performing the step of integrating offers considerable advantages. In the first place, it promotes and encourages the permanent updating of the unique document. Furthermore, in the case of transfer of the object, it constitutes an improvement of the certificate of ownership and configures the method as a valid means for the fight against receiving stolen goods. Furthermore, performing regular integration of the unique document facilitates a greater transparency of the second-hand trade in used objects, for example used bicycles.

The method facilitates the recognition and recovery of the most varied lost or stolen objects among those that, due to the use, dimensions or value thereof, are most likely to be lost and/or stolen. This is the case, for example, of vehicles, in particular light vehicles such as motorised or normal bicycles, scooters, motorised or non-motorised push scooters, as well as detachable components thereof or of vehicles in general, as well as accessories for the use of vehicles, such as helmets or other protections for cyclists and motorcyclists.

Other objects that can be recognised/tracked down through the method of the invention can be electrical and electronic apparatuses, such as household appliances and operating machines, especially if they have small dimensions, or devices such as computers, mobile telephone devices and similar devices such as smartphones, tablets and similar. Still other objects for which the method can be used can be wearable objects or ones that are easily transportable by a person, such as items of clothing, leather containers, jewellery such as valuable watches, and also musical instruments, instruments for practising sports or other leisure activities, such as skis, tennis rackets and fishing rods, especially if made of polymeric or advanced composite materials such as carbon fibre, kevlar and so on. Still other objects can also be valuable books or furnishings and various objects such as furniture, ornaments, paintings and art objects in general.

Preferably, it is envisaged to choose several recognition details chosen arbitrarily by the owner and, preferably, of a different type to each other. In this manner, the probability of unique recognition of a mass-produced object, such as a bicycle, is increased, i.e. the probability, albeit remote, that several identical objects have the same recognition detail is limited.

The above applies, in particular, if the recognition detail or details are manufacturing singularities, in particular a slight manufacturing defect such as welding bead flash or paint smudges.

Alternatively, or in addition, advantageously, after the step of choosing the recognition detail, the method further comprises a step of creating, i.e. of adding, said at least one detail. In that case, the recognition detail can be, for example, a scratch or a cut located on a surface of the object, or also an absence of material such as a hole or pinhole, or an additional portion of material on the object. These are, in any case, alterations that can be made to the object in a simple manner, using commonly used tools. In other cases, the recognition detail added by the owner or their representative can be formed of one or more symbols, such as written characters or a pictogram. Alternatively, the intentional recognition detail can be a graphic code such as a barcode or a QR code, in particular, not visible to the naked eye. Alternatively, the intentional recognition detail can be a body deliberately inserted into the object.

Preferably, the data of the object comprises keywords thereof. The keywords, for example, in the case of a bicycle, but not only, the brand/name of the manufacturer, the model, the colour and so on, can facilitate a rapid identification of the object.

Another dissimulation technique of the recognition detail provides for creating it in a manner that it is not detectable or distinguishable by the naked eye, even only with a particular photographic technique, such as grazing light photography, photography in invisible light such as infra-red light and ultraviolet light, so the step of detecting the photograph of the recognition detail is performed through such technique.

The invention will be illustrated below with the description of embodiments thereof, made by way of non-limiting example, with reference to the appended drawings, in which:
- Figure 1 is a flow diagram of the method according to 10 the invention;
- Figure 2 shows a data file for tracking down an owner of an object, in a format usable in the method according to the invention;
- Figure 3 shows a certificate of ownership of an object, in the specific case a bicycle, including a representation of the bicycle envisaged by the method;
- Figure 4 shows a data sheet of the bicycle with indication of the location of the recognition details, further including photographs or diagrams of said details;
- Figure 5 schematically shows a unique document that combines the representation of the bicycle through the certificate of ownership of Figure 3, the photographs through the data sheet of Figure 4 and the data file of the owner of Figure 2;
- Figure 6 is a perspective view of the bicycle as it appears to an observer who is unaware of the recognition details;
- Figure 7 is a perspective view of the bicycle with an indication of the location of a first recognition detail;
- Figure 8 is a local enlargement of the zone where the first recognition detail is located, which can correspond with a photograph of said detail.
- Figure 9 is a perspective view of the bicycle with an indication of the location of a second and a third recognition detail;
- Figure 10 is a local enlargement of the zone where the second recognition detail is located, which can correspond with a photograph of said detail.
- Figure 11 is a local enlargement of the zone where the third recognition detail is located, which can correspond with a photograph of said detail;
- Figure 12 shows an integration of the flow diagram of Figure 1 for a variant of the method comprising a step of integrating the unique document.

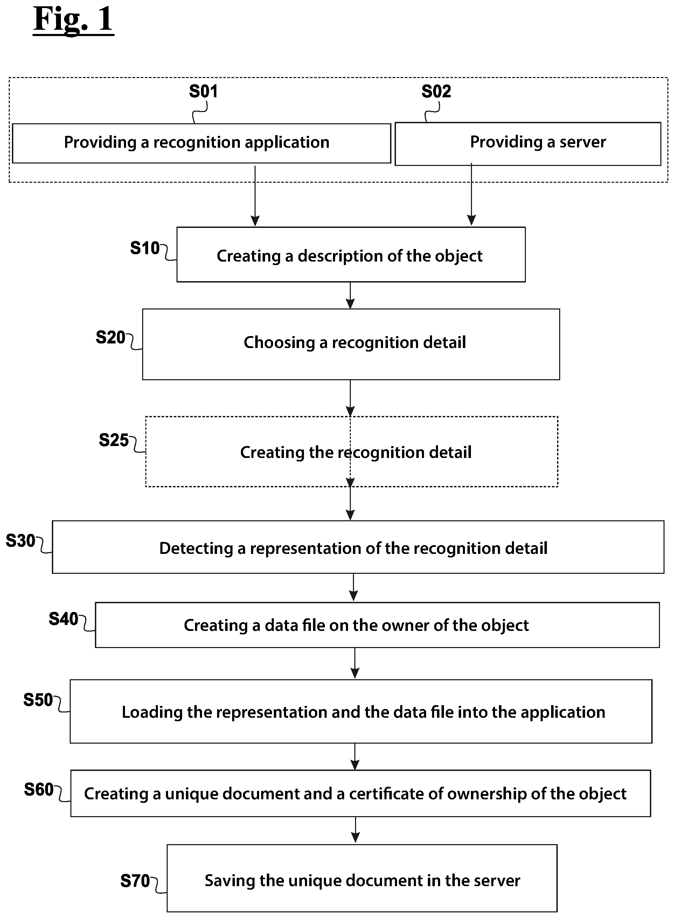

With reference to the appended Figures 1 to 12, a method is described for recognising an object 10, belonging to an owner, which the latter has lost or which has been stolen, and that has subsequently been found either by chance by another person or during an investigation following a report of theft, and then handed over to an authority. From another viewpoint, it is a method for tracking down, i.e. unequivocally identifying, the owner of such object.

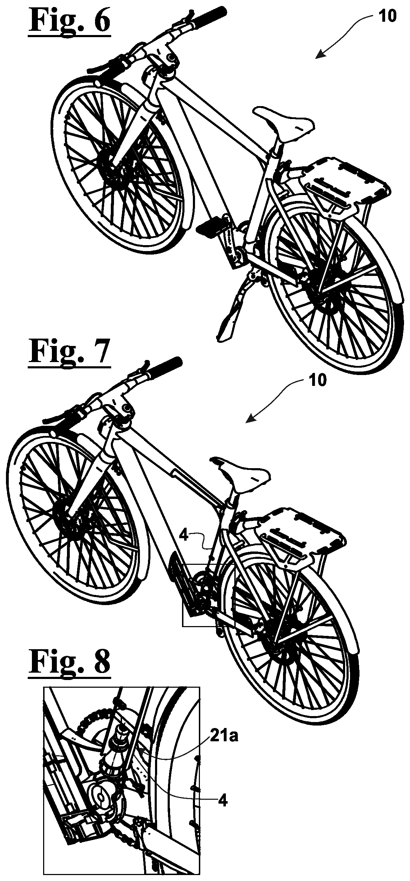

Without undermining the general nature thereof, an example of the method will be given by referring to the case of a mass-produced object such as a bicycle 10, motorised or not, shown in Figure 6 as it appears to a general observer, i.e. not distinguishable from other examples of the same object.

Similarly, the method can be used for objects of a different nature, for example vehicles of a different type to the bicycle 10, for example push scooters, scooters and so on, but also relative accessories, such as motorcycle or cycling helmets, and also relative detachable components such as mirrors, rear-view mirrors, saddlebags and so on. Similarly, the method described here can be used for electrical and/or electronic apparatuses, such as household appliances and mobile telephone devices of various type, such as mobile telephones, smartphones and tablets, as well as personal computers. Other objects for which the method according to the invention can be used are instruments for performing working and/or recreational activities of various type, such as sports activities and similar, for example skis, tennis rackets, fishing rods, or artistic or cultural activities of various nature, for example musical instruments, cameras, books. Other objects for which the method according to the invention can be used are decorative objects and items of clothing, such as jewellery, dresses, leather containers. Other objects for which the method according to the invention can be used are furnishing objects such as various furniture or furnishing, for example ornaments. However, such list is not exhaustive.

Figure 1 is a flow diagram of the method according to the invention in a basic form thereof. The method fundamentally comprises steps S01-S70 as described above.

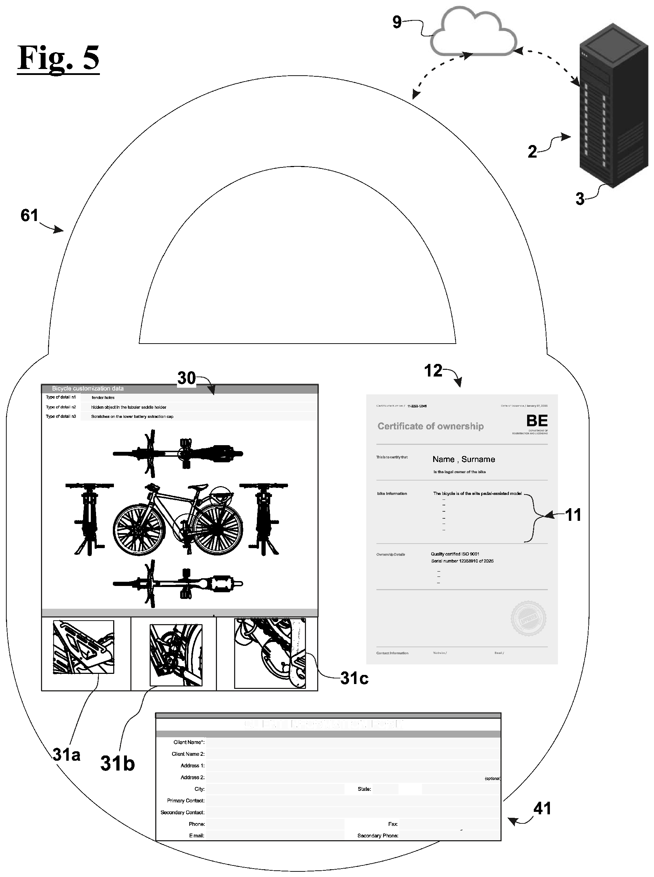

In the first place, preliminary steps S01 of providing a recognition application 30 which can be run on a computing device such as a personal computer, a smartphone or similar, a smartphone, a tablet, a computer, and S02 of providing a server 2 provided with a storage memory 3, see Figure 5, are envisaged. Such server 2 is configured to exchange data with the recognition application chosen through a data network 9, typically the Internet. In the context of the present invention, the term server 2 is to be intended, in the functional sense, as any network, whether centralised or a node of a distributed network (P2P), configured to supply data to the recognition application.

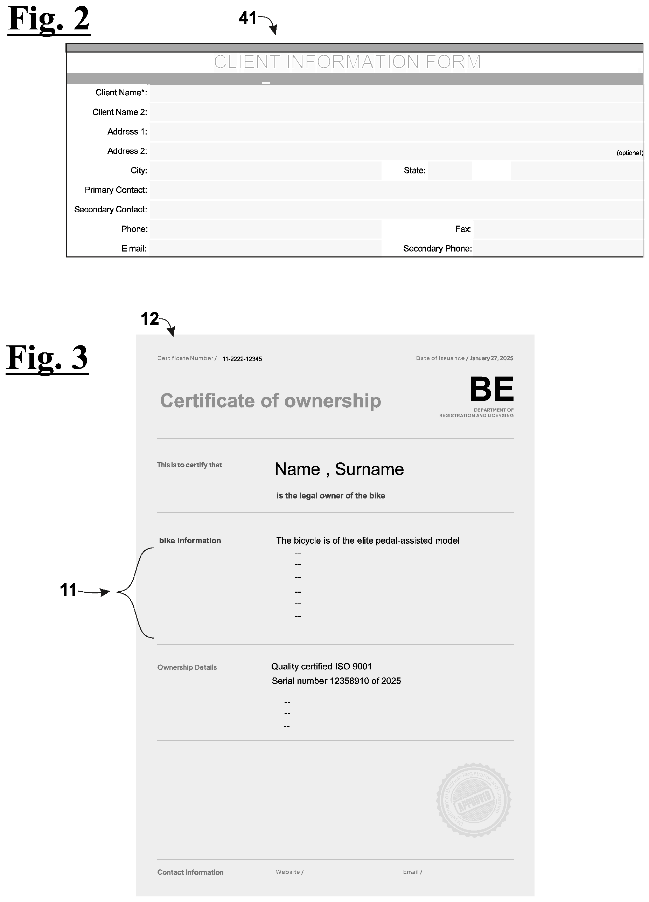

The method then provides for steps S10-S40 of creating identification documentation of the owner of the object 10. Typically, such document is in digital format. Examples of these steps, and the subsequent ones, are given with reference to the case in which the object is a bicycle 10, without undermining the general nature thereof. Figures 2 to 4 show a possible format of the fundamental documents 41, 11 and 31a-c for allowing identification of the owner and attribution to the latter of such an object 10.

More precisely, a step S10 of creating a description 11 of the object 10 is envisaged. As shown more precisely in Figure 3, the description 11 can be a verbal description and can be integrated, as in the case described, but not necessarily, into a certificate of ownership 12 of the bicycle 10.

The steps of creating documentation further comprise a step of choosing S20 one or preferably several recognition details of the object 10, and subsequently detecting S30 a representation of such or of each recognition detail. It is preferable to choose several recognition details, better if different from each other, to facilitate unique identification of the object. Recognition details means a rich and potentially extended set of features of the object. For example, a unique document of a car could contain an ownership list that includes: make, model, colour, number of doors, year of first registration, the presence of parking sensors, the type of direction indicators, whether it possesses neon lights, power type, etc. It is particularly important to include, among these features, unique recognition details or "fingerprints", meaning particular features of the object (such as manufacturing defects, signs of wear, scratches) or customisations applied by the owner (such as adhesives, custom alterations, added or removed parts, custom pieces, inscriptions, engravings, signatures, decals). The set of this information allows a robust recognition: if an object corresponds with a sufficiently high number of features, it can be presumed that it is precisely the one described.

Several examples of possible recognition details 21a, 21b, 21c for the bicycle 10 will be described more precisely below.

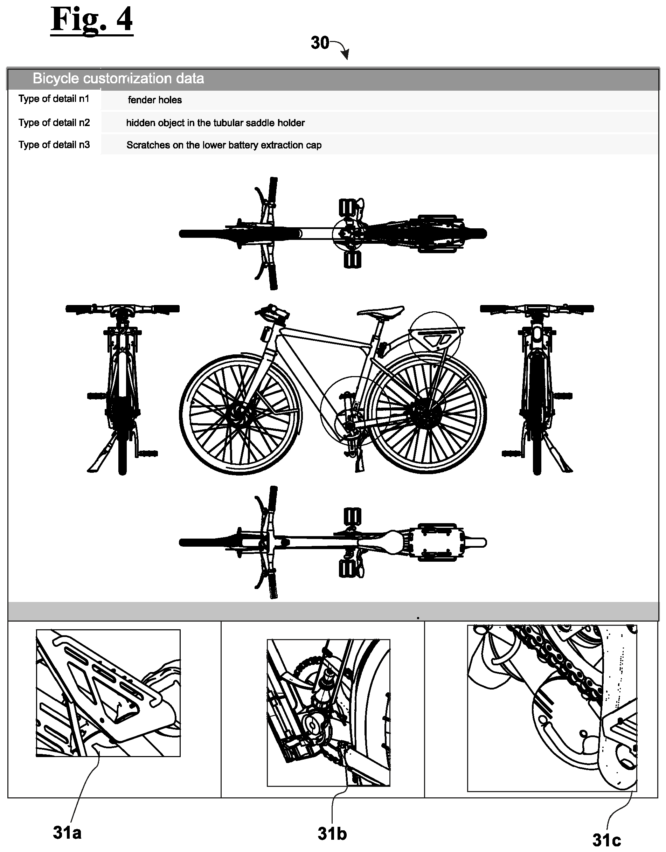

The representation of the recognition detail(s) 21a, 21b, 21c is preferably formed of a photograph 31a, 31b, 31c, as shown in Figure 4, respectively, for each recognition detail 21a, 21b, 21c, or, in a manner not shown, can also be formed of several photographs for one or more recognition details 21a, 21b e 21c. According to an advantageous variant, Figure 4 refers to a summary data sheet or synoptic chart 30 that shows the recognition details 21a, 21b, 21c in the form of respective photographs 31a, 31b, 31c, in addition to several side, front, rear, top and bottom views of the bicycle 10, with indication of the portions in which the recognition details 21a, 21b, 21c are present.

In particular, one or more recognition detail(s) can already exist in the object 10, relative to the moment when the method is applied to the object 10, for example this can be one or more singularities or slight manufacturing defects or effects of use, such as welding bead flash, irregular shapes such as a slight local oval shape of generally cylindrical components such as elements of the frame, variously located scratches, dents or protuberances.

Alternatively, or in addition, one or more recognition detail(s) can be formed in the object 10 precisely in view of application of the method according to the invention.

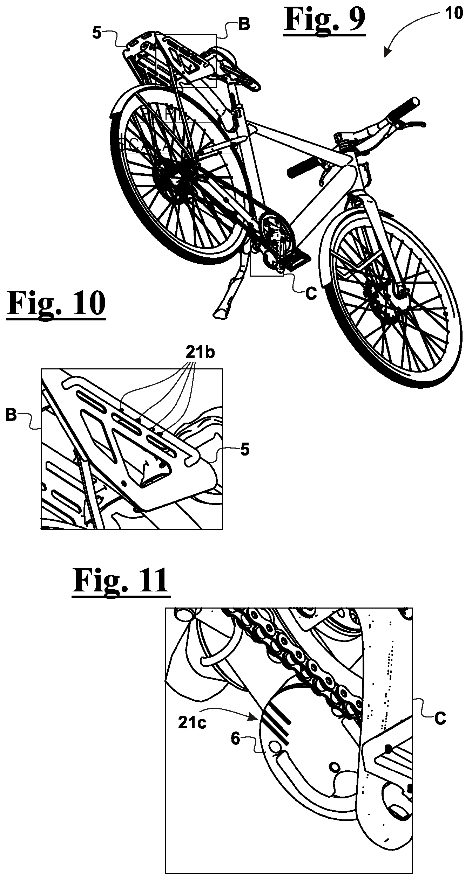

In this case, the recognition details can belong, for example, to one of the categories indicated in a non-limiting manner below, i.e. scratches or cuts located on a surface of the object 10, as in the case of the detail represented in the photograph 31c and formed of parallel lines 21c added externally on the box 6 for housing a battery of the bicycle 10; in this regard, see Figures 9 and 11, as well as Figures 4 and 5. Other intentional recognition details can be an absence of material such as holes or pinholes, passing through or not, made through or on a component of the object 10, as in the case of the detail represented in the photograph 31b and formed of four small through holes 21b made through an element of the rear baggage rack 5 of the bicycle 10; in this regard, see Figures 9 and 10, as well as Figures 4 and 5. Further intentional recognition details can be bodies or portions of material added to the object 10, as in the case of the detail represented in the photograph 31a and formed of a piece, in this case a square 21a, housed inside a tubular element 4 of the frame of the bicycle 10; in this regard, see Figures 7 and 8, as well as Figures 4 and 5.

Other recognition details, of a type not shown in the drawings, can be pictograms, writing, alphanumeric codes and/or bar codes and/or QR codes and so on, preferably not visible to the naked eye.

The steps of creating documentation further comprise a step of creating S40 a data file 41, shown as an example in Figure 2, with information on the owner and possibly also on the object 10. More precisely, Figure 2 shows a data file 41 containing personal and contact details of the owner.

In particular, keywords of the object 10 can be present in the data file 41, such as the make or the name of the manufacturer, the model, the year of manufacture, a serial number, the colour and so on, in order to facilitate rapid identification of the object.

Once again with reference to the flow diagram of Figure 1, steps S10-S40 of creating documentation relating to the object 10 and to the owner are followed by a step of loading S50 such documentation, in particular representations 31a-c of the recognition details 21a-c and the data file 41 into the chosen recognition application.

Such step of loading S50 into the application is preliminary to the subsequent steps S60 of creating a unique document 61 in electronic format, shown schematically in Figure 5, through the recognition application and in combination with the server 2, and storing or saving S70 the unique document 61 in the storage memory 3 of the server 2.

Furthermore, the creation step also provides for creating a certificate of ownership 12, in the form of a non-fungible token NFT. Said NFT is created and preferably registered on a distributed ledger technology network (blockchain) and its function is to certify ownership of the object in an unchangeable and secure manner.

Various technical solutions are envisaged for associating said certificate of ownership with the unique document 61. In a first embodiment, said certificate, comprising all the data of the unique document 61, can be saved entirely inside the token. This approach makes it possible to have all the information in a single place and to manage both the content of the unique document and the ownership thereof.

In another embodiment, preferred when large quantities of data are being managed or when greater flexibility is desired, the NFT is associated with a reference to said unique document 61, without necessarily containing the entire file. Such reference can be explicit, for example a Uniform Resource Locator (URL) that clearly indicates how to obtain the file. Alternatively, the reference can be implicit, such as an identifier number or cryptographic hash of the file. In this case, it will then be the logic of the recognition application 1 that deciphers, based on the reference received, which archiving protocol or system (e.g. IPFS, BitTorrent, or a centralised server) to use to obtain the unique document or the correct descriptive file.

A common embodiment provides for the use of tokens that comply with known standards, such as ERC-720 on the Ethereum blockchain or similar standards (e.g. BEP-720). However, the invention is not limited to these standards. Similar alternative can be used, such as "Inscription" on the Bitcoin blockchain, or smart contract customs not belonging to any specific standard. The use of one of these approaches allows better integration with the existing blockchain systems and provides a technological sublayer that guarantees native security. Any digital certification system, decentralised or not, that guarantees uniqueness and traceability of ownership can be used as an alternative.

Management and storage of the unique document are deliberately flexible and can be performed according to various architectures, depending on the needs of the application that implements the method. In one embodiment, the storage system can be centralised, with the server which manages a single file repository. In another embodiment, preferred due to its resilience and decentralisation, data management can be completely distributed. In this case, each user or network node can keep a copy of the file and make it available through peer-to-peer protocols (P2P) such as IPFS (InterPlanetary File System), BitTorrent or similar. Ad hoc protocols can also be developed, for example through the libp2p library, to guarantee access to the data that is not dependent upon a centralised architecture. In the case of sensitive data, it is also possible to use encryption solutions to make the data illegible to anyone with no means of decrypting it.

As shown schematically in Figure 5, the unique document 61 combines the description 11, the representations 31a-c of the recognition details 21a-c, and the data file 41. The integrity of such unique document 61 and the unique association thereof with the owner are guaranteed by its functional connection with the certificate of ownership 12, which is obtained in the form of a non-fungible token (NFT). Specifically, the NFT is created and immutably registered on a blockchain network and contains a unique reference to the unique document 61. Consequently, any arbitrary tampering with the unique document 61 would alter the corresponding reference thereof, making the discrepancy with the immutable reference contained in the NFT immediately evident and verifiable. This mechanism guarantees that the link between the certificate of ownership and the authentic status of the object described cannot be altered.

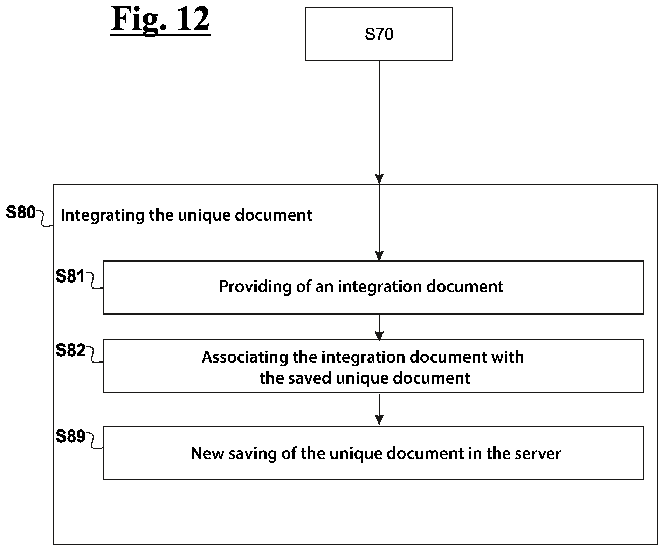

With reference to Figure 12, in a preferred example variant, the method can provide for a step of integrating S80 the unique document 61, in turn comprising the steps of providing S81 an integration document that can include, for example, a report of loss or theft of the object 10, and/or a certificate of transfer thereof to another owner, and/or an altered representation of the object 10, and/or further photographs of further recognition details, not shown, and/or yet other documents, depending, for example, on the nature of the object 10. This is followed by a step of associating S82 the integration document with the unique document 61 previously registered in the storage memory 3 of the server 2, from which an integrated unique document, not shown, is obtained, which can advantageously be associated with the unique recognition code mentioned above.

A further advantage of the method is its ability to dynamically manage the changes made to the object 10 and to the unique document thereof 61 over time. If the owner adds, changes or removes a feature or "fingerprint" on the physical object - for example following a new customisation or a sign of wear - the corresponding unique document 61 is updated. For example, a new feature can be added at the end of the file, or an invalid feature can be overwritten or eliminated.

Management of updating of the link between the unique document or the altered descriptive file and the certificate of ownership (NFT) depends on the technical nature of the reference used. In a first embodiment, in which the reference in the NFT is a cryptographic hash of the unique document or the descriptive file, updating of the file necessarily leads to the creation of a new hash. In order to maintain the consistency and integrity of the system, it is therefore necessary to update the reference in the NFT with the new hash. This can occur, for example, through a transaction on the blockchain that alters the metadata of the NFT or through the creation of a new NFT that replaces the previous one.

In another embodiment, in which the reference is a stable address, such as a Uniform Resource Locator (URL), updating of the unique document or the descriptive file might not require any change to the NFT. In this case, the unique document or the descriptive file is simply overwritten in its storage location, but the URL which points to that location remains unchanged. This flexibility in the management of updates demonstrates the adaptability of the method to the actual life cycle of the object.

The method according to the invention also provides a particularly efficient method of recognition and recovery, for example in the case in which an object is found by an authority or by an authorised entity, such as law enforcement agencies. In such a scenario, the authorised entity has access to a database containing the descriptive files or unique documents of the objects reported as lost or stolen. When an object is found, the operator can perform a first generic search in the database (for example, by type of object and colour). If this search produces results, the operator proceeds to physically inspect the object found, in order to search for one or more of the "fingerprints" or unique customisations described in the method. Once a first fingerprint (for example, a specific cut or adhesive) has been found, it is used as a filter criterion to limit the results of the search in the database. The process can be repeated iteratively: the identification of a second fingerprint on the physical object allows a further filter to be applied, progressively reducing the search area until it converges onto a single, precise correspondence. This iterative filtering method allows a positive, rapid and unequivocal identification of the object and the legitimate owner thereof, even in the case of mass-produced objects devoid of an individual serial number, overcoming the limits of traditional search methods.

The above description of embodiments of the invention is capable of demonstrating the invention from a conceptual viewpoint, so that others, using the prior art, can alter and/or adapt these embodiments in various applications without further searches and without departing from the inventive concept and, therefore, it is intended for such adaptations and alterations to be considered as equivalents of the specific embodiments. The means and materials for obtaining the functions described can be of various nature without thus falling outside the scope of the invention. The expressions or terminology used are intended to be purely descriptive, and thus non-limiting.

## Claims

1. A method for recognising an object (10) belonging to an owner of said object (10), said method comprising the steps of:
- providing (S01) a recognition application (1) configured to be run by a computing device, in particular chosen from among a smartphone, a tablet, a computer;
- providing (S02) a server (2) provided with a storage memory (3), said server (2) 10 being configured to exchange data with said recognition application (1) through a data network (9);
- creating (S10) a description (11) of said object (10);
- choosing (S20) at least one recognition detail (21a-c) of said object (10);
- detecting (S30) at least one representation (31a-c) of said at least one recognition detail (21a-c);
- creating (S40) a data file (41) with information on said owner and on said object (10);
- loading (S50) said at least one representation (31a-c) and said data file (41) into said recognition application (1);
- creating (S60) by means of said recognition application (1), in combination with said server (2), a unique document (61) in electronic format that brings together said description (11), said at least one representation (31a-c), and said data file (41) and a certificate of ownership (12) of said object (10), in the form of a non-fungible token NFT, associated with said unique document (61);
- loading (S70) said unique document (61) in electronic format into said storage memory (3) of said server (2).

2. The method according to claim 1, wherein said certificate of ownership (12) is associated with said unique document (61) through a reference such as a Uniform Resource Locator URL, an identifier number or a hash.

3. The method according to claim 1 or 2, wherein a step of integrating (S80) said unique document (61) is envisaged, obtaining an integrated unique document, said step of integrating (S80) comprising the steps of:
- providing (S81) an integration document chosen from among:
∘ a report of loss or theft of said object (10);
∘ a certificate of transfer of said object (10) to another owner;
∘ an altered representation of said object (10);
∘ further photographs of further recognition details;
∘ a combination of what is listed above;
- associating (S82) said integration document with said unique document (61), obtaining said integrated unique document, in particular, associated with said unique recognition code.

4. The method according to claim 1, wherein said object (10) is chosen from among:
- a vehicle chosen from among a bicycle, a push scooter, a scooter;
- an accessory of a vehicle, in particular a motorcycle helmet or cycling helmet;
- a detachable component of a vehicle;
- a household appliance;
- an electronic device chosen from among: a desktop computer; a mobile device chosen from among: a mobile telephone, a smartphone, a tablet;
- a piece of jewellery;
- an item of clothing;
- a musical instrument;
- an instrument for practising sports, such as skis or tennis rackets;
- a book;
- a leather container;
- a piece of furniture or ornament;
- an art object;
- a fishing rod.

5. The method according to claim 1, wherein said step of choosing (S20) at least one recognition detail provides for choosing a plurality of recognition details (21a-c) chosen arbitrarily by said owner and, preferably, of a different type to each other.

6. The method according to claim 1, wherein said at least one recognition detail (21a-c) is a manufacturing singularity, in particular a slight manufacturing defect of said object (10).

7. The method according to claim 1, further comprising a step of creating (S25) said at least one recognition detail (21a-c), chosen from among:
- a scratch or cut located on a surface of said object (10);
- a pictogram;
- writing; an absence of material such as a hole or pinhole;
- a portion of material added to said object (10);
- an alphanumeric code and/or a graphic code chosen from among a barcode and a QR code not visible to the naked eye;
- a body inserted into said object (10).

8. The method according to claim 1, wherein said data on said object (10) in said data file (41) comprises keywords of said object (10).

9. The method according to claim 1, wherein said representation (31a-c) is created with a technique chosen from among grazing light photography; a photograph in invisible light chosen from among infra-red light and ultraviolet light.
